# EUROPEAN PATENT APPLICATION

(11) **EP 4 730 889 A1**
(43) Date of publication of application: **22.04.2026**
(21) Application number: 25207049.5
(22) Date of filing: 06.10.2025
(51) Int. Cl.: H04W 72/12, H04W 52/02, H04W 84/12, H04W 88/06

(54) **METHOD AND DEVICE FOR COMMUNICATION, WIFI DEVICE AND PEER DEVICE**

(30) Priority: 16.10.2024 CN 202411450838
(71) Applicant: Amlogic (Shanghai) Co., Ltd., Shanghai (CN)
(72) Inventor: XU, Yanchao, Shanghai (CN); YU, Ching Hwa, Shanghai (CN); YIP, Mike, Shanghai (CN)
(74) Representative: Piotrowicz, Pawel Jan Andrzej

(57) **Abstract**

Embodiments of the present disclosure provide a method and device for communication, a WiFi device, and a peer device. The method includes configuring in device coexistence information, wherein the in device coexistence information is used to indicate that a WiFi device supports only reception during a constrained WiFi time window. Embodiments of the present disclosure can effectively reduce the waste of air interface resources and increase the throughput of WiFi devices.

## Description

### CROSS-REFERENCE TO RELATED APPLICATIONS

This application claims priority to Chinese Patent Application No. 202411450838.0, filed on October 16, 2024, the entire disclosure of which is incorporated herein by reference.

### TECHNICAL FIELD

The present disclosure relates to the technical field of communication technology, and in particular to a method and device for communication, a WiFi device, and a peer device.

### BACKGROUND

On current devices that support wireless radio access technology (WiFi), there are often other interference sources that may interfere with WiFi data interaction. These interference sources may include other wireless communication protocols on the device, such as Bluetooth (BT), 4G Long Term Evolution (LTE), 5G New Radio (NR), and Ultra Wideband (UWB), or components within the device itself, such as high-frequency Double Data Rate (DDR) inside the device and Peripheral Component Interconnect Express (PCI-Express or PCIE) pathways. These interference sources may create In Device Coexistence (IDC) issues with WiFi devices.

In the prior art, the communication strategy of prohibiting transmission and reception during interference time window is usually adopted. Specifically, the operating time of a WiFi device is divided into WiFi available time and WiFi unavailable time. During WiFi unavailable time, peer devices cannot transmit frames to the WiFi device, and the WiFi device will not transmit or reply frames to the peer device.

However, the above solution will lead to a waste of air interface resources, resulting in a decrease in the throughput of the WiFi device and an increase in power consumption.

### SUMMARY

In light of this, embodiments of the present disclosure provide a method and device for communication, a WiFi device, and a peer device, which can effectively reduce the waste of air interface resources and increase the throughput of WiFi devices.

To achieve the above objectives, embodiments of the present disclosure provide the following technical solutions.

In a first aspect, a method for communication is provided in the embodiments of the present disclosure, comprising: configuring in device coexistence (IDC) information, wherein the IDC information is used to indicate that a WiFi device supports only reception during a constrained WiFi time window.

Optionally, the constrained WiFi time window is a time window subject to interference from a non-periodic interference source; the method further comprises: transmitting the IDC information before a starting instant of the constrained WiFi time window.

Optionally, the IDC information is carried in one or more of the following: the IDC information is carried in a response frame which is transmitted to a peer device; the IDC information is carried in a transmitted frame which is transmitted actively.

Optionally, the constrained WiFi time window is a time window subject to interference from a periodic interference source.

Optionally, one or more of the following conditions are met: the constrained WiFi time window comprises a non-target wake time service period time window determined by interaction of request/response frames established by target wake time; the IDC information is indicated by a target wake time negotiation result.

Optionally, one or more of the following conditions are met: the IDC information further comprises capability indication information; the frame carrying the IDC information further comprises the capability indication information; the target wake time negotiation result indicating the IDC information further comprises the capability indication information; wherein the capability indication information indicates the reception capability of the WiFi device during the constrained WiFi time window.

Optionally, the capability indication information comprises one or more of the following: max spatial stream for received frames; max data rate; min transmit power; and available frame bandwidth.

Optionally, the WiFi device has 2x2 Multi-Input-Multi-Out (MIMO) reception capability; the capability indication information is further used to indicate that the WiFi device only supports 1x1 Single-Input Single-Out (SISO) during the constrained WiFi time window.

Optionally, the WiFi device has established a Block Acknowledgement (Ack) Agreement with a peer device; the method further comprises: receiving an Aggerated Medium Protocol Data Unit(AMPDU), wherein the data link layer header of the Aggerated Medium Protocol Data Unit(AMPDU) comprises an Acknowledgement Policy Indicator; wherein the Acknowledgement Policy Indicator is used to indicate whether the peer device requires the WiFi device to reply with an Acknowledgement frame.

Optionally, the Acknowledgement Policy Indicator satisfies one or more of the following conditions: the Acknowledgement Policy Indicator is 2 bits; if the peer device does not require the WiFi device to immediately reply with the Acknowledgement frame, the Acknowledgement Policy Indicator is set to one of 0b'11 and 0b'00, and is received individually or continuously during the constrained WiFi time window; if the peer device requires the WiFi device to reply with the Acknowledgement frame, the Acknowledgement Policy Indicator is set to the other of 0b'11 and 0b'00, and is received during an unconstrained WiFi time window.

Optionally, the WiFi device has established a Block Acknowledgement Agreement with a peer device; the method further comprises: receiving a Block Acknowledgement request frame during an unconstrained WiFi time window; wherein the Block Acknowledgement request frame is used to indicate that the peer device does not require the WiFi device to reply with an Acknowledgement frame.

Optionally, transmitting a transmitted frame to a peer device; wherein the transmitted frame carries indication information, which is used to indicate that the constrained WiFi time window ends early.

Optionally, the WiFi device has established a multi-link association with a peer device, and the IDC information corresponds to a first link; the method further comprises: in response to not transmitting a frame carrying the IDC information on the first link before a preset instant, transmitting a frame carrying the IDC information on a second link; wherein the preset instant is determined based on a starting instant of the constrained WiFi time window.

Optionally, the preset instant is obtained by subtracting a frame duration from the starting instant of the constrained WiFi time window; wherein the frame duration is the duration of the frame carrying the IDC information.

Optionally, the IDC information is carried in a transmitted frame which is transmitted actively; wherein the transmitted frame also carries Prioritized Schedule Request indication information, and the Prioritized Schedule Request indication information is used to indicate that a peer device is requested to prioritize scheduling of the WiFi device.

Optionally, the IDC information is configured in response to the following: an interference source is detected, and the interference source is capable of interfering with WiFi data interaction of the WiFi device, or the WiFi device is capable of interfering with the interference source.

In a second aspect, a method for communication is provided in the embodiments of the present disclosure, comprising: determining IDC information, wherein the IDC information is used to indicate that a WiFi device supports only reception during a constrained WiFi time window.

Optionally, a Block Acknowledgement Agreement has been established with the WiFi device; the method further comprises: transmitting an Aggerated Medium Protocol Data Unit, wherein the data link layer header of the Aggerated Medium Protocol Data Unit comprises an Acknowledgement Policy Indicator; wherein the Acknowledgement Policy Indicator is used to indicate whether the WiFi device is required to reply with an Acknowledgement frame.

Optionally, the Acknowledgement Policy Indicator satisfies one or more of the following conditions: the Acknowledgement Policy Indicator is 2 bits; if the WiFi device is not required to immediately reply with the Acknowledgement frame, the Acknowledgement Policy Indicator is set to one of 0b'11 and 0b'00, and is received individually or continuously during the constrained WiFi time window; if the WiFi device is required to reply with the Acknowledgement frame, the Acknowledgement Policy Indicator is set to the other of 0b'11 and 0b'00, and is received during an unconstrained WiFi time window.

Optionally, a Block Acknowledgement Agreement has been established with the WiFi device; the method further comprises: transmitting a Block Acknowledgement request frame during an unconstrained WiFi time window, wherein the Block Acknowledgement request frame is used to indicate that the WiFi device is not required to reply with an Acknowledgement frame.

In a third aspect, a device for communication is provided in the embodiments of the present disclosure, comprising: a configuration circuit, configured to configure in device coexistence information, wherein the in device coexistence information is used to indicate that a WiFi device supports only reception during a constrained WiFi time window.

In a fourth aspect, a device for communication is provided in the embodiments of the present disclosure, comprising: a determining circuit, configured to determine in device coexistence information, wherein the in device coexistence information is used to indicate that a WiFi device supports only reception during a constrained WiFi time window.

In a fifth aspect, a computer-readable storage medium is provided in the embodiments of the present disclosure, having a computer program stored thereon, wherein when the computer program is executed by a processor, the method for communication provided in the first aspect is executed.

In a sixth aspect, a WiFi device is provided in the embodiments of the present disclosure, comprising a memory and a processor, wherein the memory stores a computer program executable on the processor, wherein the processor executes the steps of the method for communication provided in the first aspect when executing the computer program.

In a seventh aspect, a peer device is provided in the embodiments of the present disclosure, comprising a memory and a processor, wherein the memory stores a computer program executable on the processor, wherein the processor executes the steps of the method for communication provided in the second aspect when executing the computer program.

In an eighth aspect, a computer program product is provided in the embodiments of the present disclosure, comprising a computer program/instructions, wherein when executed by the processor, the computer program/instructions implement the steps of the method for communication provided in the second aspect.

In a ninth aspect, a chip (or a device for communication) is provided in the embodiments of the present disclosure, having a computer program stored thereon, wherein when the computer program is executed by the chip, the method for communication provided in the first or second aspect is executed.

In a tenth aspect, a chip module is provided in the embodiments of the present disclosure, having a computer program stored thereon, wherein when the computer program is executed by the chip module, the method for communication provided in the first or second aspect is executed.

In an eleventh aspect, a system for communication is provided in the embodiments of the present disclosure, comprising a device for performing the method provided in the first aspect and a device for performing the method provided in the second aspect.

Compared with the prior art, the technical solutions in the embodiments of the present disclosure have the advantages as follows:
In some embodiments, IDC information is configured to instruct a WiFi device to only support reception during a constrained WiFi time window. The constrained WiFi time window can be set. Compared to the prior art, which uses a WiFi unavailable time window and completely prohibits a peer device from transmitting frames to the WiFi device during the WiFi unavailable time window, the solution of the embodiments of the present disclosure allow a peer device to still have the opportunity to transmit frames to the WiFi device even during the constrained WiFi time window, thereby reducing waste of air interface resources and increasing the throughput of the WiFi device.

Furthermore, if the constrained WiFi time window is a time window subject to interference from a non-periodic interference source, the IDC information can be transmitted before a starting instant of the constrained WiFi time window. Since the non-periodic interference source has the characteristics of non-fixed interference time window and difficult to predict, the IDC information can be transmitted before the starting instant of the constrained WiFi time window.

Furthermore, the method may satisfy one or more of the following conditions: the IDC information further comprises capability indication information; the frame carrying the IDC information further comprises the capability indication information; the target wake time negotiation result indicating the IDC information further comprises the capability indication information. Thus, the peer device may determine the reception capability of the WiFi device within the constrained WiFi time window based on the capability indication information, and then transmit frames to the WiFi device within the reception capability range, thereby further improving transmission and reception reliability while allowing transmission and reception.

Furthermore, the WiFi device has 2x2 MIMO reception capabilities; the capability indication information is further used to indicate that the WiFi device only supports 1x1 SISO during the constrained WiFi time window. This improves the WiFi device's reception reliability during the constrained WiFi time window by intentionally reducing the WiFi device's reception capabilities during the constrained WiFi time window.

Furthermore, the WiFi device has established a Block Ack Agreement with a peer device. By receiving an AMPDU frame containing an Ack Policy Indicator field in the data link layer header of the AMPDU frame, the peer device can indicate whether it requires the WiFi device to reply with an Ack frame. This allows for further communication between the peer device and the WiFi device, while also enabling the WiFi device to receive frames, ensuring that the WiFi device's reply operation better meets the peer device's needs. Furthermore, while the WiFi device is capable of receiving frames, embodiments of the present disclosure also increase the possibility of the WiFi device replying with frames, further expanding its application scenarios.

Furthermore, when a WiFi device has established a multi-link association with a peer device, by transmitting a frame carrying the IDC information on a second link in response to not transmitting a frame carrying the IDC information on the first link before a preset instant, the WiFi device can transmit the IDC information to the peer device across multiple links, further improving the success rate of IDC information transmission. Furthermore, by setting a preset instant and using the second link to transmit the frame carrying the IDC information that were not transmitted on the first link before the preset instant, frames that could not be transmitted but are very important (for example, a response frame from a WiFi device happens to fall within the time window when an interference source exists) can be transmitted in a timely manner, further improving the reliability of transmission and reception.

Furthermore, the IDC information is carried in a transmitted frame which is transmitted actively; wherein the transmitted frame also carries Prioritized Schedule Request indication information, and the Prioritized Schedule Request indication information is used to indicate that a peer device is requested to prioritize scheduling of the WiFi device, thereby increasing communication between the WiFi device and the peer device, improving the competitiveness of the WiFi device, and further improving the data scheduling strategy.

### BRIEF DESCRIPTION OF THE DRAWINGS

In order to more clearly illustrate the embodiments of the present disclosure or the technical solutions in the prior art, the following briefly introduces the drawings required for use in the embodiments or the description of the prior art. Obviously, the drawings described below are merely embodiments of the present disclosure. For a person skilled in the art, other drawings can be obtained based on the provided drawings without paying any creative work.
FIG. 1 shows a schematic diagram of an operating scenario of a WiFi device subject to interference from a periodic interference source in the prior art;
FIG. 2 shows a schematic diagram of a first operating scenario of a WiFi device subject to interference from a non-periodic interference source in the prior art;
FIG. 3 shows a schematic diagram of a second operating scenario of a WiFi device subject to interference from a non-periodic interference source in the prior art;
FIG. 4 shows a schematic structural diagram of a WiFi device with a Bluetooth module in the prior art;
FIG. 5 shows a flow diagram of a method for communication according to the present disclosure;
FIG. 6 shows a schematic diagram of a first operating scenario of a WiFi device subject to interference from a non-periodic interference source according to the present disclosure;
FIG. 7 shows a schematic diagram of a second operating scenario of a WiFi device subject to interference from a non-periodic interference source according to the present disclosure;
FIG. 8 shows a schematic diagram of a third operating scenario of a WiFi device subject to interference from a non-periodic interference source according to the present disclosure;
FIG. 9 shows a schematic diagram of a fourth operating scenario of a WiFi device subject to interference from a non-periodic interference source according to the present disclosure;
FIG. 10 shows a schematic diagram of a first operating scenario of a WiFi device subject to interference from a periodic interference source according to the present disclosure;
FIG. 11 shows a schematic diagram of a second operating scenario of a WiFi device subject to interference from a periodic interference source according to the present disclosure;
FIG. 12 shows a schematic diagram of an operating scenario of a method for communication for a WiFi device to indicate that a constrained WiFi time window ends early according to the present disclosure;
FIG. 13 shows a schematic diagram of an operating scenario of a method for communication for a WiFi device based on multi-link connection according to the present disclosure;
FIG. 14 shows a schematic diagram of an operating scenario of a method for communication for a WiFi device to request priority scheduling of a peer device according to the present disclosure;
FIG. 15 shows a flow diagram of another method for communication according to the present disclosure;
FIG. 16 shows a schematic structural diagram of a device for communication according to the present disclosure;
FIG. 17 shows a schematic structural diagram of another device for communication according to the present disclosure;
FIG. 18 shows a schematic hardware structural diagram of a WiFi device according to the present disclosure.

### DETAILED DESCRIPTION

The following will be combined with the accompanying drawings in the embodiments of the present disclosure to clearly and completely describe the technical solutions in the embodiments of the present disclosure. Obviously, the embodiments described are only part of the embodiments of the present disclosure, not all of the embodiments. Based on the embodiments in the present disclosure, all other embodiments obtained by a person skilled in the art without making creative efforts are within the scope of the present disclosure.

The communication systems applicable to the embodiments of the present disclosure include, but are not limited to, third-generation (3G) systems, LTE systems, fourth-generation (4G) systems, fifth-generation (5G) systems, NR systems, and future evolution systems or multiple communication convergence systems. The 5G system may be a non-standalone (NSA) 5G system or a standalone (SA) 5G system. The solutions of the embodiments of the present disclosure are also applicable to various new future communication systems, such as 6G and 7G.

The present disclosure primarily relates to communication between WiFi devices and peer devices.

The WiFi device may be a terminal device (or terminal) supporting WiFi function. The terminal in the embodiments of the present disclosure may refer to various forms of user equipment (UE), access terminal, user unit, user station, mobile station (MS), remote station, remote terminal, mobile device, user terminal, terminal equipment, wireless communication device, user agent or user device that supports WiFi function. The terminal may also be a cellular phone, a cordless phone, a Session Initiation Protocol (SIP) phone, a Wireless Local Loop (WLL) station, a Personal Digital Assistant (PDA), a handheld device with wireless communication function, a computing device or other processing device connected to a wireless modem, a vehicle-mounted device, a wearable device, a terminal in a future 5G network or a terminal in a future evolved Public Land Mobile Network (PLMN) that supports WiFi function, etc. The embodiments of the present disclosure are not limited to this.

The peer device may be a network device supporting WiFi function or a terminal device supporting WiFi function.

The network device in the embodiments of the present disclosure may also be referred to as an access network device, for example, it may be a base station (BS) (also referred to as a base station device). The network device is a device deployed in a radio access network (RAN) to provide wireless communication functions. For example, in second-generation (2G) networks, devices providing base station functions include base transceiver stations (BTSs). In 3G networks, devices providing base station functions include Node Bs. In 4G networks, devices providing base station functions include evolved Node Bs (eNBs). In wireless local area networks (WLANs), devices providing base station functions are access points (APs). In NR, devices providing base station functions include next generation node base stations (gNBs) and evolved Node Bs (ng-eNBs). Communication between gNBs and terminals utilizes NR technology, while communication between ng-eNBs and terminals utilizes Evolved Universal Terrestrial Radio Access (E-UTRA) technology. Both gNBs and ng-eNBs can connect to the 5G core network. The network devices in the embodiments of the present disclosure also include devices providing base station functions in future communication systems.

As described in the background, in the prior art, the communication strategy of prohibiting transmission and reception during interference time window is usually adopted. Specifically, the operating time of a WiFi device is divided into WiFi available time and WiFi unavailable time. During WiFi unavailable time, peer devices cannot transmit frames to the WiFi device, and the WiFi device will not transmit or reply frames to the peer device.

In an existing improved solution, a Packet Traffic Arbitration (PTA) solution and/or a Time Division Duplex (TDD) solution is adopted. In the TDD solution, WiFi data and non-WiFi data are transmitted in a time-sharing manner. WiFi data is usually transmitted within the WiFi time slice, while the non-WiFi time slice is the time window when WiFi is unavailable.

Typically, during non-WiFi time slice (the time window when WiFi is unavailable), WiFi transmission and/or reception are prohibited. Therefore, a mechanism is needed to enable WiFi devices to stop transmitting and receiving before the start of non-WiFi time slice. Because for a WiFi device, transmitting (Tx) a frame is a self-triggered behavior, the WiFi device itself can easily control its own transmitting behavior; however, for receiving (Rx) a frame, this is triggered by the peer device in the WiFi protocol, and the WiFi device itself generally cannot directly control the behavior of the peer device. Therefore, a mechanism is needed to enable the WiFi device to control the peer device's transmitting (i.e., the WiFi device's receiving behavior).

In the current newer TDD solution, reception can be controlled based on the WiFi transmission period (TxOP) or physical protocol data unit (PPDU) level, that is, notifying the peer device to control the peer device's transmitting behavior to the WiFi device.

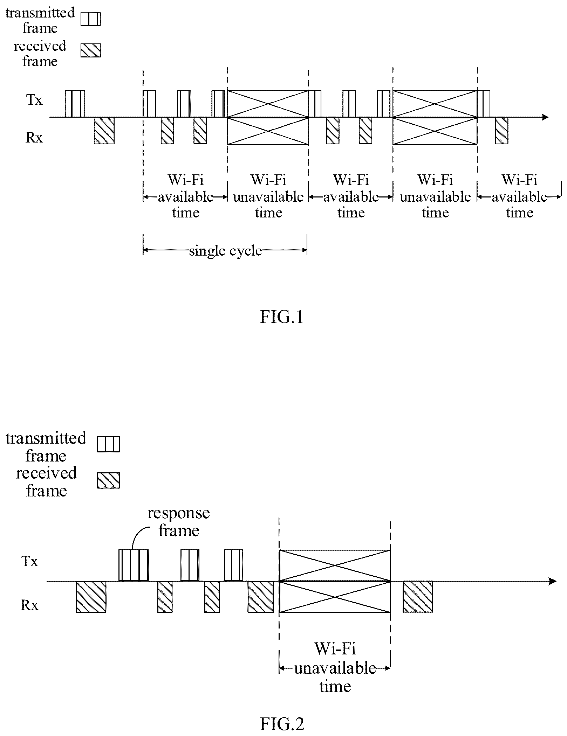

Referring to FIG. 1, FIG. 1 shows a schematic diagram of an operating scenario of a WiFi device subject to interference from a periodic interference source in the prior art.

In the method for a WiFi device to control the transmission of a peer device shown in FIG. 1, the peer device is notified of IDC information by exchanging periodic information. In some embodiments, the Target Wake Time (TWT) mechanism in 802.11ax is used to notify the peer device of its available time and unavailable time. As shown in FIG. 1, the WiFi device negotiates a periodic TWT scheduling strategy with the peer device through interaction of Request/Response frames established by the initial TWT. Within this negotiated TWT schedule, TWT Service Period (TWT SP) time windows periodically occur. Within this TWT SP window is the available time slice of the WiFi device. The peer device can transmit frames to the WiFi device (that is, the WiFi device can receive), and the WiFi device can also transmit frames to the peer device. Within the non-TWT SP window, it is the unavailable time slice of the WiFi device. During this time window, the peer device cannot transmit frames to the WiFi device.

It can be understood that the solution shown in FIG. 1 is suitable for the situation when the interference source behavior of the WiFi device is periodic. For the situation when the interference source behavior has no obvious periodicity, the WiFi device can notify the peer device of its own IDC information, such as its available time or unavailable time, through the response frame transmitted by the WiFi device when replying to the peer device or a transmitted frame actively transmitted by the WiFi device.

Referring to FIG. 2, FIG. 2 shows a schematic diagram of a first operating scenario of a WiFi device subject to interference from a non-periodic interference source in the prior art.

As shown in FIG. 2, the WiFi device informs the peer device of the subsequent unavailable time in the response frame it transmits to the peer device. After receiving this information, the peer device controls its transmission behavior so that it does not transmit frames during the WiFi device's unavailable time and only transmit frames to the WiFi device after the unavailable time ends.

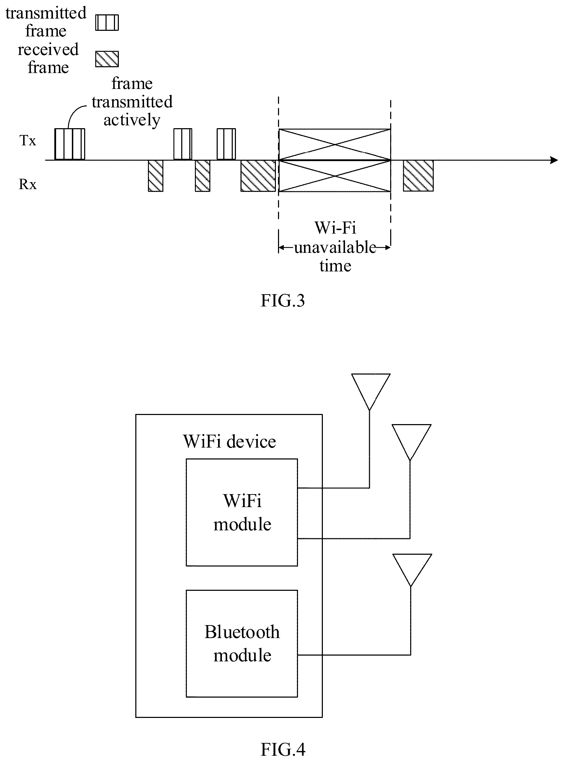

FIG. 3 shows a schematic diagram of a second operating scenario of a WiFi device subject to interference from a non-periodic interference source in the prior art.

As shown in FIG. 3, a frame transmitted by a WiFi device carries information about the unavailable time window for subsequent WiFi devices. Upon receiving this information, the peer device controls its transmission behavior to prevent transmissions from occurring during the WiFi device's unavailable time window.

As can be seen from the above, in the prior art, the operating time of a WiFi device is divided into WiFi available time and WiFi unavailable time. During WiFi unavailable time, the WiFi device cannot transmit or receive. This solution wastes air interface resources, resulting in a decrease in the throughput of the WiFi device and an increase in power consumption.

Further research has revealed that in actual applications, the interference caused by other interference source modules on the WiFi module depends on the actual design of the WiFi device.

For example, if the interference source module is Bluetooth (BT), when there is BT frames interaction, the WiFi in the WiFi device may still be able to transmit or receive.

Referring to FIG. 4, FIG. 4 shows a schematic structural diagram of a WiFi device with a Bluetooth module in the prior art.

The WiFi device shown in FIG. 4 has a Bluetooth module and a WiFi module, wherein the WiFi module has two antennas (i.e. the WiFi module can have a maximum 2×2 MIMO capability), and the BT module has an independent antenna.

In the WiFi device shown in FIG. 4, one of the two antennas of the WiFi module may be closer to the BT antenna due to the design, resulting in the WiFi frame reception on this antenna being more susceptible to interference from the BT antenna, while the other antenna is less affected by the interference from the BT antenna, and this interference will vary depending on the transmission power of the transmission frame on the BT antenna. Therefore, depending on the transmission and/or reception behavior of the BT, the possible reception behavior of the WiFi module may include the following situations:
(1) When the BT is receiving, the WiFi module can receive in 2x2 Multi-Input-Multi-Out (MIMO);
(2) When the BT is transmitting at low power, the WiFi module can receive in 2x2 MIMO;
(3) When the BT is transmitting at high power, the WiFi module can receive in 1x1 Single-Input Single-Out (SISO).

However, in the prior art, WiFi devices cannot use the time window when BT is receiving or transmitting, that is, when there is interference with WiFi. This leads to a waste of air interface resources, a decrease in WiFi throughput, and an increase in power consumption.

In some embodiments, IDC information is configured to indicate a WiFi device to only support reception during a constrained WiFi time window. The constrained WiFi time window can be set. Compared to the prior art, which uses a WiFi unavailable time window and completely prohibits a peer device from transmitting frames to the WiFi device during the WiFi unavailable time window, the solution of the embodiments of the present disclosure allow a peer device to still have the opportunity to transmit frames to the WiFi device even during the constrained WiFi time window, thereby reducing waste of air interface resources and increasing the throughput of the WiFi device.

To make the aforementioned objectives, features, and beneficial effects of the present disclosure more readily apparent, specific embodiments of the present disclosure are described in detail below with reference to the accompanying drawings.

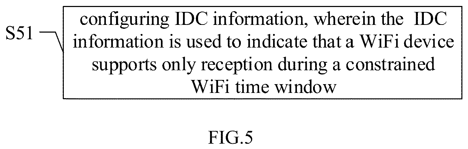

Referring to FIG. 5, FIG. 5 shows a flow diagram of a method for communication according to the present disclosure. The method for communication can be used in a WiFi device and may include step S51.

Step S51: configuring IDC information, wherein the IDC information is used to indicate that a WiFi device supports only reception during a constrained WiFi time window.

It can be understood that, in specific embodiments, the above method can be implemented using a software program running on a processor integrated within a chip or chip module; alternatively, the method can be implemented using hardware or a combination of hardware and software, such as using a dedicated chip or chip module, or using a dedicated chip or chip module in combination with a software program.

In some embodiments, the constrained WiFi time window can be a time window when the WiFi device is subject to interference from an IDC interference source.

During the constrained WiFi time window, the WiFi device's transmission and/or reception capabilities are limited.

Specifically, cases where the transmission and/or reception capabilities of a WiFi device are limited may include one or more of the following:
(1) The WiFi device can only receive frames of a certain size (Rx Only), such as only receive 1x1 frames or receive 2x2 frames;
(2) The WiFi device can only transmit frames of a certain size (Tx only);
(3) The WiFi device can receive frames of a certain size and transmit frames of a certain size (Rx + Tx);
(4) The WiFi device can neither receive nor transmit.

It should be noted that in case (4), the constrained WiFi time window may correspond to the WiFi unavailable time window in the prior art, while in cases (1) - (3), the constrained WiFi time window can be used for transmission and reception under certain restrictions.

Specifically, during the time window when the WiFi device is subject to interference from an IDC interference source, the device notifies the peer device of IDC information such as this time window and the limited WiFi transmission/reception capabilities during this time window based on its own device capabilities.

It can be understood that by indicating to the peer device that only reception is supported during the constrained WiFi time window, the peer device can clearly understand that the WiFi device is in a constrained state. For example, it may not expect to receive a response frame from the WiFi device during the constrained WiFi time window. However, the WiFi device can still actively transmit a transmitted frame to the peer device after indicating the IDC information to the peer device according to specific needs.

In other words, the IDC information configured by the WiFi device is used to inform the peer device of the constrained WiFi device's capabilities and does not constitute an absolute constraint on the WiFi device's actual transmission and reception capabilities.

In some embodiments, IDC information is configured to instruct a WiFi device to only support reception during a constrained WiFi time window. The constrained WiFi time window can be set. Compared to the prior art, which uses a WiFi unavailable time window and completely prohibits a peer device from transmitting frames to the WiFi device during the WiFi unavailable time window, the solution of the embodiments of the present disclosure allow a peer device to still have the opportunity to transmit frames to the WiFi device even during the constrained WiFi time window, thereby reducing waste of air interface resources and increasing the throughput of the WiFi device.

Furthermore, the solutions of embodiments of the present disclosure can be executed in response to appropriate conditions.

Specifically, the IDC information may be configured in response to the following: an interference source is detected, and the interference source is capable of interfering with WiFi data interaction of the WiFi device, or the WiFi device is capable of interfering with the interference source.

The interference source may be used to represent a module that may interfere with the WiFi device, such as a cellular network module or a Bluetooth module.

In some embodiments, the WiFi device may include a Bluetooth module, and the links supported by the WiFi device may include a 2.4 GHz WiFi link. In this case, the Bluetooth module may act as an interference source and interfere with the WiFi device. Furthermore, the WiFi device may also act as an interference source and interfere with the Bluetooth module.

In some embodiments, the WiFi device may include a cellular network module, and the links supported by the WiFi device may include a 5 GHz WiFi link. In this case, the cellular network module may act as an interference source and interfere with the WiFi device. Furthermore, the WiFi device may also act as an interference source and interfere with the cellular network module.

Specifically, if a WiFi link in a WiFi device is susceptible to interference, such as if the supported link includes a 2.4 GHz WiFi link, which is particularly susceptible to interference from a Bluetooth module, IDC information can be configured to trigger implementation of the embodiments of the present disclosure.

Furthermore, if an interference source capable of interfering with WiFi data interaction of the WiFi device is detected, IDC information can also be configured to trigger implementation of the embodiments of the present disclosure.

It should be noted that conventional methods can be used to detect interference sources capable of interfering with WiFi data interaction of the WiFi device, and the embodiments of the present disclosure are not limited thereto.

In some embodiments, the constrained WiFi time window is a time window subject to interference from a non-periodic interference source; the method further comprises: transmitting the IDC information before a starting instant of the constrained WiFi time window.

It should be noted that the step of transmitting the IDC information can be performed by the WiFi device to the peer device, but is not limited thereto.

The descriptions of the WiFi device and the peer device can be found above and are not further elaborated here.

In some embodiments, if the constrained WiFi time window is a time window subject to interference from a non-periodic interference source, the IDC information can be transmitted before a starting instant of the constrained WiFi time window. Since the non-periodic interference source has the characteristics of non-fixed interference time window and difficult to predict, the IDC information can be transmitted before the starting instant of the constrained WiFi time window.

In some embodiments, the IDC information can be carried in one or more of the following: the IDC information is carried in a response frame which is transmitted to a peer device; the IDC information is carried in a transmitted frame which is transmitted actively.

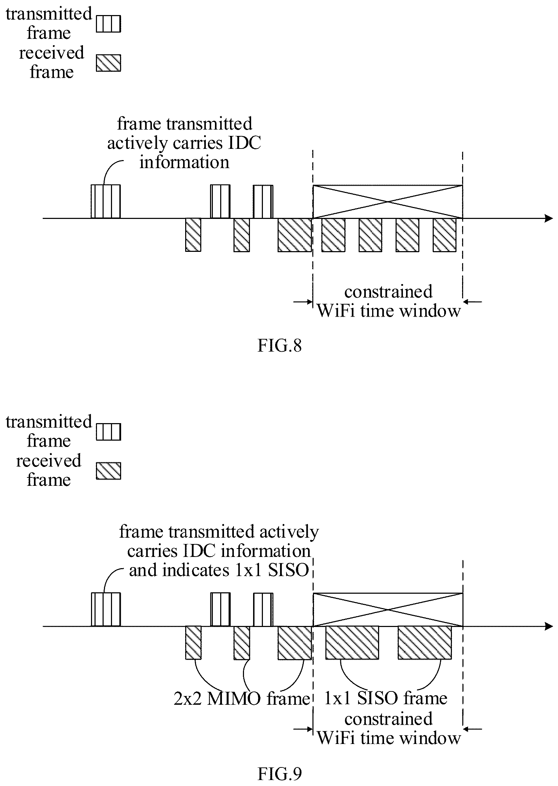

With reference to FIGS. 6 to 9, FIG. 6 and FIG. 7 illustrate the case where the IDC information is carried in a response frame which is transmitted to a peer device. FIG. 8 and FIG. 9 illustrate the case where the IDC information is carried in a transmitted frame which is transmitted actively.

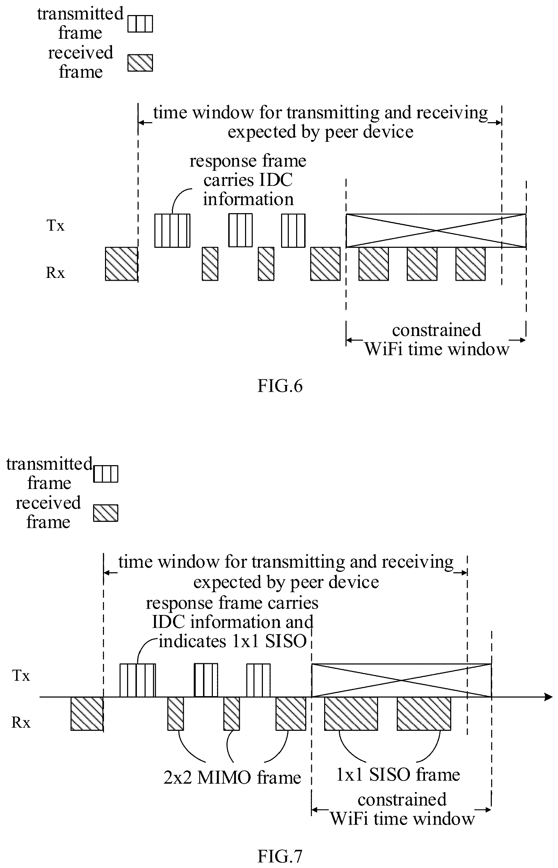

FIG. 6 shows a schematic diagram of a first operating scenario of a WiFi device subject to interference from a non-periodic interference source according to the present disclosure; FIG. 7 shows a schematic diagram of a second operating scenario of a WiFi device subject to interference from a non-periodic interference source according to the present disclosure; FIG. 8 shows a schematic diagram of a third operating scenario of a WiFi device subject to interference from a non-periodic interference source according to the present disclosure; FIG. 9 shows a schematic diagram of a fourth operating scenario of a WiFi device subject to interference from a non-periodic interference source according to the present disclosure.

In some embodiments, the method for communication satisfies one or more of the following: the IDC information further comprises capability indication information; the frame carrying the IDC information further comprises the capability indication information; the target wake time negotiation result indicating the IDC information further comprises the capability indication information; wherein the capability indication information indicates the reception capability of the WiFi device during the constrained WiFi time window

In embodiments of the present disclosure, by providing multiple ways to indicate capability indication information, application flexibility can be improved.

It should be noted that FIGS. 6 to 9 illustrate an example in which the frame carrying the IDC information also includes capability indication information, but this is not limiting.

As shown in FIG. 6, in a response frame transmitted to a peer device, the WiFi device informs the peer device of the subsequent constrained WiFi time window and indicates that during this time window, the WiFi device only supports reception (Rx Only).

This response frame carries information indicating the constrained WiFi time window and indicates that only reception is possible during this time window.

Specifically, during the peer device's desired transceiver time period (TxOP), the peer device expects to be able to continuously transmit frames to the WiFi device.

During an unconstrained WiFi time window, the WiFi device has normal transmit/receive capabilities, and the peer device can expect the WiFi device to transmit a response frame.

During a constrained WiFi time window, the WiFi device can only receive. Therefore, during this time window, the peer device can transmit frames to the WiFi device but cannot expect to receive frames from it.

In some embodiments, the capability indication information may include one or more of the following: max spatial stream for received frames; max data rate; min transmit power; and available frame bandwidth.

The max spatial stream for received frames may indicate the data volume of frames received by the WiFi device during the constrained WiFi time window; the max data rate may indicate the upper limit of the data rate of the WiFi device receiving frames during the constrained WiFi time window; the min transmit power may indicate the lower limit of the transmit power of the WiFi device during the constrained WiFi time window; and the available frame bandwidth may indicate the bandwidth information of the WiFi device during the constrained WiFi time window.

In some embodiments, by setting capability indication information containing appropriate parameters, the peer device can further determine the reception capability of the WiFi device during the constrained WiFi time window based on the capability indication information, specify the specific parameter constraints for transmission and reception with the WiFi device during the constrained WiFi time window, and then transmit frames to the WiFi device within the reception capability range. This not only allows transmission and reception, but also further improves the accuracy and reliability of transmission and reception during the constrained WiFi time window.

The following describes the differences between FIG. 7 and FIG. 6.

As shown in FIG. 7, the WiFi device has 2x2 MIMO reception capabilities. In its response frame to the peer device, the WiFi device also informs the peer device that during the constrained WiFi time window, the WiFi device may perform Rx only and has a limited 1x1 SISO reception capability.

Specifically, during the peer device's desired transmit and receive time period (TxOP), the peer device expects to continuously transmit frames to the WiFi device.

This response packet carries information indicating the constrained WiFi time window and that only 1x1 SISO can be received during this window.

In other words, during an unconstrained WiFi time window, the peer device can transmit 2x2 MIMO frames, but during a constrained WiFi time window, the peer device can only transmit 1x1 SISO frames.

In some embodiments, the WiFi device has 2x2 MIMO reception capabilities; the capability indication information is further used to indicate that the WiFi device only supports 1x1 SISO during the constrained WiFi time window. This improves the WiFi device's reception reliability during the constrained WiFi time window by intentionally reducing the WiFi device's reception capabilities during the constrained WiFi time window.

As shown in FIG. 8, in a frame that the WiFi device actively transmits, it informs the peer device of the subsequent constrained WiFi time window and indicates that during this time window, the WiFi device only supports reception (Rx Only).

This actively transmitted frame carries information indicating a constrained WiFi time window and indicates that this time window only supports reception.

During the unconstrained WiFi time window, the WiFi device has normal transmit/receive capabilities, and the peer device can expect the WiFi device to transmit a response frame.

During the constrained WiFi time window, the WiFi device supports only reception. Therefore, during this time window, the peer device can transmit to the WiFi device but cannot expect to receive frames from it.

In some embodiments, the capability indication information may include one or more of the following: max spatial stream for received frames; max data rate; min transmit power; and available frame bandwidth.

The max spatial stream for received frames may indicate the data volume of frames received by the WiFi device during the constrained WiFi time window; the max data rate may indicate the upper limit of the data rate of the WiFi device receiving frames during the constrained WiFi time window; the min transmit power may indicate the lower limit of the transmit power of the WiFi device during the constrained WiFi time window; and the available frame bandwidth may indicate the bandwidth information of the WiFi device during the constrained WiFi time window.

In some embodiments, by setting capability indication information containing appropriate parameters, the peer device can further determine the reception capability of the WiFi device during the constrained WiFi time window based on the capability indication information, specify the specific parameter constraints for transmission and reception with the WiFi device during the constrained WiFi time window, and then transmit frames to the WiFi device within the reception capability range. This not only allows transmission and reception, but also further improves the accuracy and reliability of transmission and reception during the constrained WiFi time window

The following describes the differences between FIG. 9 and FIG. 8.

As shown in FIG. 9, the WiFi device has 2x2 MIMO reception capabilities. In the frame it actively transmits, the WiFi device also informs the peer device that during the constrained WiFi time window, the WiFi device may perform Rx-only and has a limited 1x1 SISO reception capability.

This actively transmitted frame carries information indicating the constrained WiFi time window and that only 1x1 SISO can be received during this window.

In other words, during an unconstrained WiFi time window, the peer device can transmit 2x2 MIMO frames, but during a constrained WiFi time window, the peer device can only transmit 1x1 SISO frames.

In some embodiments, the WiFi device has 2x2 MIMO reception capabilities; the capability indication information is further used to indicate that the WiFi device only supports 1x1 SISO during the constrained WiFi time window. This improves the WiFi device's reception reliability during the constrained WiFi time window by intentionally reducing the WiFi device's reception capabilities during the constrained WiFi time window.

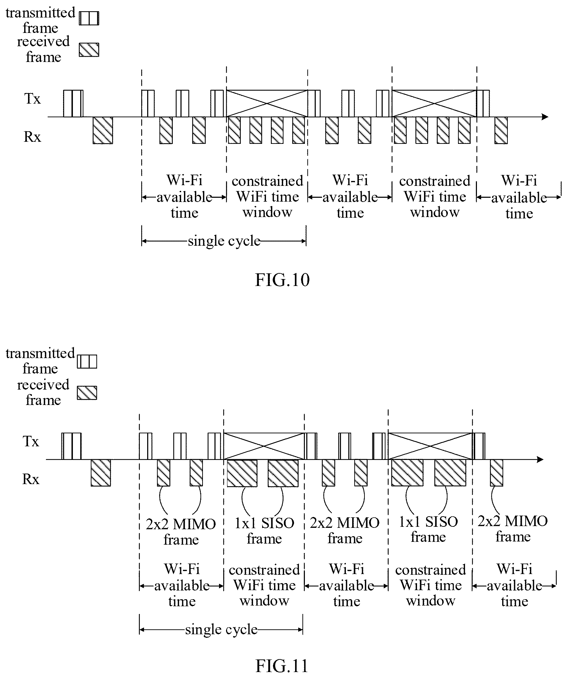

With reference to FIG. 10 and FIG. 11, FIG. 10 and FIG. 11 illustrate the case where a WiFi device is subject to interference from a periodic interference source.

FIG. 10 shows a schematic diagram of a first operating scenario of a WiFi device subject to interference from a periodic interference source according to the present disclosure. FIG. 11 shows a schematic diagram of a second operating scenario of a WiFi device subject to interference from a periodic interference source according to the present disclosure.

Furthermore, the constrained WiFi time window may be a time window subject to interference from periodic interference sources.

In some embodiments, the constrained WiFi time window may include a non-target wake time service period time window determined by interaction of request/response frames established by target wake time. Specifically, in the method where a WiFi device controls the transmission of a peer device, IDC information may be notified to the peer device through periodic information exchange. In some embodiments, the TWT mechanism in 802.11ax may be used to notify the peer device of its available time and unavailable time. As shown in the figure below, the WiFi device establishes interaction of request/response frames through the initial TWT and negotiates a periodic TWT scheduling strategy with the peer device. In this negotiated TWT schedule, TWT Service Period (TWT SP) time windows occur periodically.

In other words, non-TWT SP time windows also occur periodically. In some embodiments, non-TWT service period time windows may be used as the constrained WiFi time window.

In the methods for communication illustrated in FIG. 10 and FIG. 11, taking TWT as an example, the method of notifying the peer device about IDC information by exchanging periodic information can achieve the purpose of WiFi device controlling the peer device to transmit. Furthermore, in addition to the basic TWT information, the transmitting and/or reception capabilities of the WiFi device during non-TWT service period time windows are also added.

As shown in FIG. 10, when negotiating TWT with the peer device, the WiFi device also negotiates that during the constrained WiFi time window (i.e., non-TWT service period time windows), the WiFi device's capabilities are receive-only.

The WiFi device has normal transmission/ reception capabilities during the unconstrained WiFi time window, and the peer device can expect the WiFi device to transmit a response packet.

However, according to the TWT protocol, during a constrained WiFi time window, the WiFi device can only receive. Therefore, during this time window, the peer device can transmit to the WiFi device but cannot expect to receive frames from it.

The first transmitted frame shown in FIG. 10 may be a TWT Setup Request, and the first received frame shown in FIG. 10 may be a TWT Setup Response.

In some embodiments, the IDC information may be indicated by a TWT negotiation result.

Specifically, the TWT negotiation result may be determined based on the TWT Setup Request and the TWT Setup Response, such as a TWT scheduling strategy determined based on the TWT Setup Request and the TWT Setup Response.

In some embodiments, during TWT negotiation, a constrained WiFi time window may be predefined, rather than being limited to indicating the constrained WiFi time window through the transmission of IDC information.

In some embodiments, during TWT negotiation, an indication of the WiFi device's capabilities within a non-TWT service period time window may be carried.

It should be noted that, in some embodiments, if a WiFi device is subject to interference from a periodic interference source, the WiFi device may also transmit the IDC information before the starting instant of the constrained WiFi time window. This is not limited to the use of TWT negotiation results.

Furthermore, the method for communication may satisfy one or more of the following: the IDC information further includes capability indication information; the frame carrying the IDC information further comprises the capability indication information; the TWT negotiation result indicating the IDC information further includes the capability indication information; wherein the capability indication information indicates the reception capability of the WiFi device during the constrained WiFi time window.

Furthermore, the capability indication information may include one or more of the following: max spatial stream for received frames; max data rate; min transmit power; and available frame bandwidth.

In specific implementations, further details regarding the capability indication information are provided with reference to the descriptions in FIGS. 6 to 9 and are not further elaborated here.

The following describes the differences between FIG. 11 and FIG. 10.

As shown in FIG. 11, the WiFi device has 2x2 MIMO reception capabilities. During the TWT negotiation, it is also indicated that during the constrained WiFi time window, the WiFi device may perform Rx Only and has a limited 1x1 SISO reception capability.

In TWT negotiation, the capability of WiFi devices in the constrained WiFi time window is carried out, and only 1x1 SISO can be received.

In other words, during the unconstrained WiFi time window, the peer device can transmit 2x2 MIMO frames, but during the constrained WiFi time window, the peer device can only transmit 1x1 SISO frames.

In some embodiments, the WiFi device has 2x2 MIMO reception capabilities; the capability indication information is further used to indicate that the WiFi device only supports 1x1 SISO during the constrained WiFi time window. This improves the WiFi device's reception reliability during the constrained WiFi time window by intentionally reducing the WiFi device's reception capabilities during the constrained WiFi time window.

It is important to note that the methods for communication shown in FIGS. 6 to 11 only support receive (Rx Only) capabilities during the constrained WiFi time window. Therefore, if a peer device wishes to use this time window, it can only transmit frames to the WiFi device and cannot yet receive corresponding AcK frames from the WiFi device.

In some embodiments, the peer device may attempt to obtain a corresponding AcK frame from the WiFi device in an unconstrained WiFi time window according to the WiFi protocol through the following method.

In some embodiments, the WiFi device has established a Block Ack Agreement with a peer device; the method further comprises: receiving an Aggerated Medium Protocol Data Unit(AMPDU), wherein the data link layer header of the Aggerated Medium Protocol Data Unit(AMPDU) comprises an Ack Policy Indicator; wherein the Ack Policy Indicator is used to indicate whether the peer device requires the WiFi device to reply with an Ack frame.

Furthermore, the Ack Policy Indicator satisfies one or more of the following conditions: the Ack Policy Indicator is 2 bits; if the peer device does not require the WiFi device to immediately reply with the AcK frame, the Ack Policy Indicator is set to one of 0b'11 and 0b'00, and is received individually or continuously during the constrained WiFi time window; if the peer device requires the WiFi device to reply with the Ack frame, the Ack Policy Indicator is set to the other of 0b'11 and 0b'00, and is received during an unconstrained WiFi time window.

Specifically, the peer device and the WiFi device have established a Block Ack Agreement. During the constrained WiFi time window, the peer device transmits an Aggregated Medium Protocol Data Unit (AMPDU) frame to the WiFi device with the 2-bit Ack Policy Indicator field in the MAC header set to either 0b'11 or 0b'00 (0b'11 is used as an example below). This Ack Policy Indicator eliminates the need for the WiFi device to immediately reply with an Ack frame after receiving the AMPDU.

In this way, the peer device can continuously transmit AMPDU frames with Ack Policy Indicator = 0b'11 during the constrained WiFi time window.

In some embodiments, the WiFi device has established a Block Ack Agreement with a peer device. By receiving an AMPDU frame containing an Ack Policy Indicator field in the data link layer header of the AMPDU frame, the peer device can indicate whether it requires the WiFi device to reply with an Ack frame. This allows for further communication between the peer device and the WiFi device, while also enabling the WiFi device to receive frames, ensuring that the WiFi device's reply operation better meets the peer device's needs. Furthermore, while the WiFi device is capable of receiving frames, embodiments of the present disclosure also increase the possibility of the WiFi device replying with frames, further expanding its application scenarios.

In some embodiments, the peer device may also transmit a frame carrying the other of 0b'11 and 0b'00 (0b'00 is used as an example below) during an unconstrained WiFi time window. That is, by transmitting a frame with Ack Policy Indicator = 0b'00 during an unconstrained WiFi time window, the peer device requests a corresponding ACK frame from the WiFi device.

In some embodiments, the WiFi device has established a Block Ack Agreement with a peer device. By transmitting 0b'00 during an unconstrained WiFi time window, the peer device can indicate that it needs the WiFi device to reply with an Ack frame. This allows for further communication between the peer device and the WiFi device, while also enabling the WiFi device to receive frames, ensuring that the WiFi device's reply operation better meets the peer device's needs.

In some embodiments, the WiFi device has established a Block Ack Agreement with a peer device; the method further comprises: receiving a Block Ack request frame during an unconstrained WiFi time window; wherein the Block Ack request frame is used to indicate that the peer device does not require the WiFi device to reply with an ACK frame.

In some embodiments, the WiFi device has established a Block Ack Agreement with a peer device. By receiving the Block Ack request frame, the peer device can indicate that it does not require the WiFi device to reply with an ACK frame. This allows for further communication between the peer device and the WiFi device, while also enabling the WiFi device to receive frames, ensuring that the WiFi device's reply operation better meets the peer device's needs.

In some embodiments, the method may further include: transmitting a transmitted frame to a peer device; wherein the transmitted frame carries indication information, which is used to indicate that the constrained WiFi time window ends early.

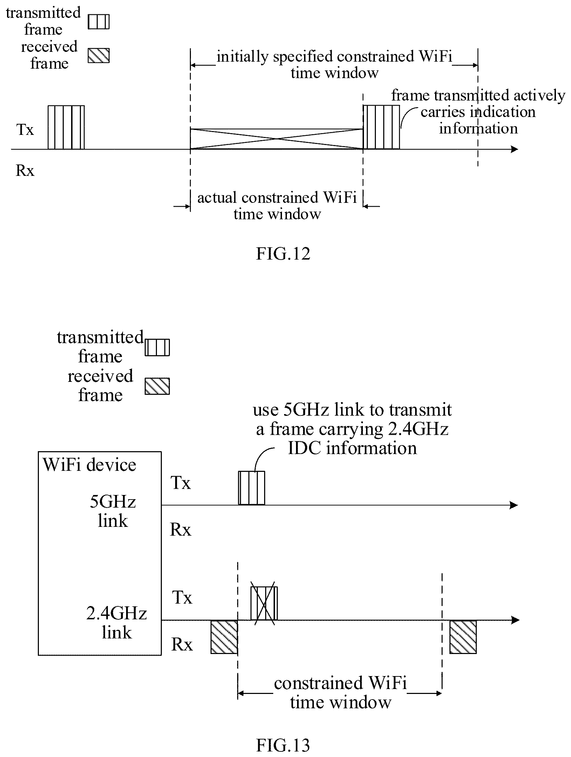

Referring to FIG. 12, FIG. 12 shows a schematic diagram of an operating scenario of a method for communication for a WiFi device to indicate that a constrained WiFi time window ends early according to the present disclosure.

Specifically, when a WiFi device indicates a constrained WiFi time window, the interference source may end or disappear prematurely. To better utilize air interface resources, the WiFi device can transmit a frame in advance to notify the peer device of the early end of the constrained WiFi time window.

As shown in FIG. 12, the actively transmitted frame carries the indication information, which can make the actual constrained WiFi time window shorter than the initially specified constrained WiFi time window, thereby better utilizing air interface resources.

It should be noted that in some embodiments, when a WiFi device transmits a response frame or actively transmits a frame to notify the peer device of its IDC information, it may encounter situations where the frame carrying the IDC information cannot be transmitted. For example, as shown below, the WiFi device's response frame falls within a time window when the interference source is present, resulting in the response frame carrying the IDC information being unable to be transmitted, and thus the corresponding IDC information cannot be communicated to the peer device.

In some embodiments, when a WiFi device supports 802.11be and Multi-Link Operation (MLO), and establishes a Multi-Link association with a peer device, it can transmit IDC information to the peer device across the link.

Specifically, the WiFi device has established a multi-link association with a peer device, and the in device coexistence information corresponds to a first link; the method further comprises: in response to not transmitting a frame carrying the in device coexistence information on the first link before a preset instant, transmitting a frame carrying the in device coexistence information on a second link; wherein the preset instant is determined based on a starting instant of the constrained WiFi time window.

Referring to FIG. 13, FIG. 13 shows a schematic diagram of an operating scenario of a method for communication for a WiFi device based on multi-link connection according to the present disclosure.

FIG. 13 shows a WiFi device and a peer device establishing two links, one at 2.4GHz and the other at 5GHz.

Interference sources can affect different links in different frequency bands differently, or they can affect only some links while leaving the rest unaffected. For example, if a WiFi device has 2.4GHz and 5GHz links, and the same device has a 2.4GHz BT module, then the impact of the BT module on the WiFi device is mainly 2.4GHz WiFi. Therefore, when the WiFi 2.4GHz link cannot transmit the IDC information on the 2.4GHz link to the peer device in time, the 5GHz link can be used to transmit the IDC information on the 2.4GHz link to the peer device.

In the embodiment shown in FIG. 13, if a WiFi device cannot transmit a frame carrying the IDC information of this link in time on the 2.4GHz link, it can use the 5GHz link to transmit a frame carrying 2.4GHz IDC information to the peer device. That is, transmitting IDC information to the peer device across the link.

In some embodiments, when a WiFi device has established a multi-link association with a peer device, by transmitting a frame carrying the IDC information on a second link in response to not transmitting a frame carrying the IDC information on the first link before a preset instant, the WiFi device can transmit the IDC information to the peer device across multiple links, further improving the success rate of IDC information transmission. Furthermore, by setting a preset instant and using the second link to transmit the frame carrying the IDC information that were not transmitted on the first link before the preset instant, frames that could not be transmitted but are very important (for example, a response frame from a WiFi device happens to fall within the time window when an interference source exists) can be transmitted in a timely manner, further improving the reliability of transmission and reception.

Furthermore, the preset instant is obtained by subtracting a frame duration from the starting instant of the constrained WiFi time window; wherein the frame duration is the duration of the frame carrying the IDC information.

Specifically, the starting instant of the constrained WiFi time window can be set as T1, and the duration of the frame carrying the IDC information can be set as L1, so the preset instant is T1-L1.

In some embodiments, by subtracting the duration of the frame carrying the IDC information from the starting instant of the constrained WiFi time window, the latest instant at which the frame carrying the IDC information cannot be transmitted can be more accurately determined.

In some embodiments, when a WiFi device notifies a peer device of IDC information, due to the characteristics of the WiFi protocol, even within the WiFi device's available time window, there is no guarantee that the peer device will compete for a channel or schedule resources to the WiFi device for frames transmission within this time window. In particular, when the WiFi device is a station (STA), since the peer device may be an access point (AP) device, multiple devices may be connected to this peer AP device. In this case, when the STA WiFi device notifies the peer AP device of its available time window, the peer AP device may schedule other STA devices during this time window, causing the STA WiFi device to miss the WiFi available time.

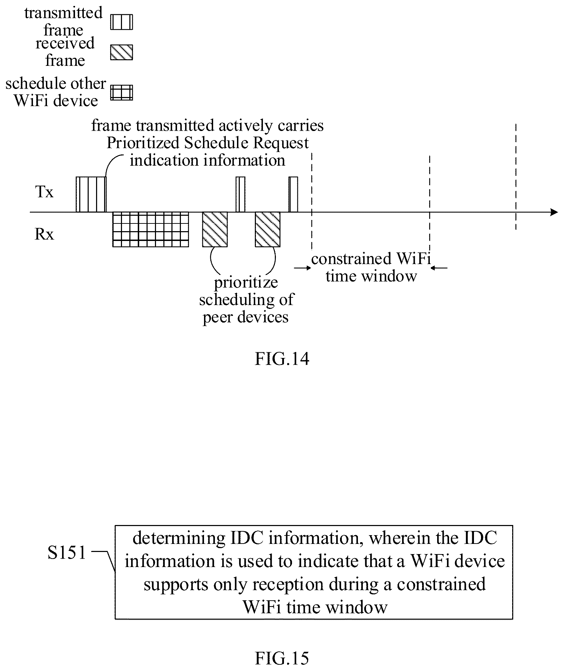

Referring to FIG. 14, FIG. 14 shows a schematic diagram of an operating scenario of a method for communication for a WiFi device to request priority scheduling of a peer device according to the present disclosure.

Taking the example of a STA WiFi device shown in FIG. 14, the STA WiFi device notifies its peer AP of its IDC information, but the peer AP may prioritize other STA devices.

Understandably, the peer AP may wait a considerable time before scheduling the STA WiFi device and transmitting frames to it. If the STA WiFi device is in a scenario with high latency requirements, such as being in the connection state, key negotiation phase, or obtaining IP address DHCP phase, the latency caused by IDC may lead to a decline in user experience.

In some embodiments, the IDC information is carried in a transmitted frame which is transmitted actively; wherein the transmitted frame also carries Prioritized Schedule Request indication information, and the Prioritized Schedule Request indication information is used to indicate that a peer device is requested to prioritize scheduling of the WiFi device.

It should be noted that the step of requesting the peer device to prioritize scheduling the WiFi device may include prioritizing scheduling of downlink frames of the WiFi device, and may also include prioritizing scheduling of uplink frames of the WiFi device. In other words, the Prioritized Schedule Request indication information can be used to indicate the request to the peer device to prioritize scheduling of downlink frames transmitted to the WiFi device, and may also be used to indicate the request to the peer device to prioritize scheduling of uplink frames of the WiFi device.

As shown in FIG. 14, the IDC information carried in the frame sent by the WiFi device also includes information about Prioritized DL Schedule Request. This information is used to indicate to the peer device, requesting the peer device to prioritize scheduling resources to transmit downlink frames (DL frames) to the WiFi device. The peer device can then select a corresponding data scheduling strategy based on this indication.

For example, in FIG. 14, the STA WiFi device carries both the IDC information and the Prioritized Schedule Request indication information in its transmitted frame, requesting that the peer device prioritize scheduling the WiFi device during the WiFi device's available time window.

After receiving this information, the peer device will prioritize transmitting frames destined for the STA WiFi device during the STA WiFi device's available time window.

In some embodiments, the IDC information is carried in a transmitted frame which is transmitted actively; wherein the transmitted frame also carries Prioritized Schedule Request indication information, and the Prioritized Schedule Request indication information is used to indicate that a peer device is requested to prioritize scheduling of the WiFi device, thereby increasing communication between the WiFi device and the peer device, improving the competitiveness of the WiFi device, and further improving the data scheduling strategy.

Referring to FIG. 15, FIG. 15 shows a flow diagram of another method for communication according to the present disclosure. The another method for communication may be used for the peer device and may include step S151.

Step S151: determining in device coexistence information, wherein the in device coexistence information is used to indicate that a WiFi device supports only reception during a constrained WiFi time window.

It can be understood that, in a specific implementation, the above method can be implemented in the form of a software program, which runs in a processor integrated inside a chip or chip module; or, the method can be implemented in the form of hardware or a combination of hardware and software, for example, using a dedicated chip or chip module, or using a dedicated chip or chip module in combination with a software program.

In some embodiments, by determining IDC information, the peer device can determine that the WiFi device supports only reception during a constrained WiFi time window. Compared to the prior art, which uses a WiFi unavailable time window and completely prohibits a peer device from transmitting frames to the WiFi device during the WiFi unavailable time window, the solution of the embodiments of the present disclosure allow a peer device to still have the opportunity to transmit frames to the WiFi device even during the constrained WiFi time window, thereby reducing waste of air interface resources and increasing the throughput of the WiFi device.

It should be noted that in some embodiments, many parts involve the WiFi device transmitting information, such as transmitting IDC information. Correspondingly, the peer device can receive the information transmitted by the WiFi device, such as receiving the IDC information.

The descriptions of the WiFi device and the peer device can be found above and will not be repeated here.

In some embodiments, the peer device can, in accordance with the WiFi protocol, attempt to obtain a corresponding ACK frame from the WiFi device during an unconstrained WiFi time window using the following method.

In some embodiments, a peer device has established a Block Ack Agreement with the WiFi device; the method further comprises: transmitting an Aggerated Medium Protocol Data Unit(AMPDU), wherein the data link layer header of the Aggerated Medium Protocol Data Unit(AMPDU) comprises an Ack Policy Indicator; wherein the Ack Policy Indicator is used to indicate whether the WiFi device is required to reply with an ACK frame.

Furthermore, the Ack Policy Indicator satisfies one or more of the following conditions: the Ack Policy Indicator is 2 bits; if the WiFi device is not required to immediately reply with the acknowledgment frame(ACK), the Ack Policy Indicator is set to one of 0b'11 and 0b'00, and is received individually or continuously during the constrained WiFi time window; if the WiFi device is required to reply with the acknowledgment frame, the Ack Policy Indicator is set to the other of 0b'11 and 0b'00, and is received during an unconstrained WiFi time window.

In some embodiments, a peer device has established a Block Ack Agreement with the WiFi device; the method further comprises: transmitting a Block Ack request frame during an unconstrained WiFi time window, wherein the Block Ack request frame is used to indicate that the WiFi device is not required to reply with an acknowledgment frame.

For more information about another method for communication, please refer to the previous description and will not be repeated here.

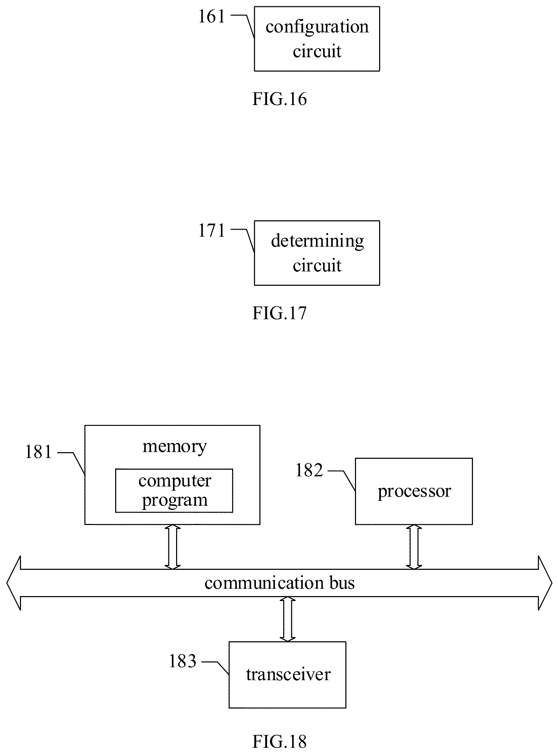

Referring to FIG. 16, FIG. 16 shows a schematic structural diagram of a device for communication according to the present disclosure. The device for communication may be used in a WiFi device, and may further include: a configuration circuit 161, configured to configure IDC information, wherein the IDC information is used to indicate that a radio access technology WiFi device supports only reception during a constrained WiFi time window.

For more information on the operating principle, method, and beneficial effects of the configuration circuit 161, please refer to the detailed description of FIGS. 5 to 14 above and will not be repeated here.

In some embodiments, the device for communication shown in FIG. 16 may correspond to a chip with communication functionality within a communication equipment; or may correspond to a chip or chip module with communication functionality within a communication equipment, or may correspond to a communication equipment.

Referring to FIG. 17, FIG. 17 shows a schematic structural diagram of another device for communication according to the present disclosure. The device for communication may be used in a peer device, and may further include:
a determining circuit 171, configured to determine IDC information, wherein the IDC information is used to indicate that a radio access technology WiFi device supports only reception during a constrained WiFi time window.

For more information on the operating principle, method, and beneficial effects of the determining circuit 171, please refer to the detailed description of FIG. 15 above and will not be repeated here.

In some embodiments, the device for communication shown in FIG. 17 may correspond to a chip with communication functionality within a communication equipment; or may correspond to a chip or chip module with communication functionality within a communication equipment, or may correspond to a communication equipment.

An embodiment of the present disclosure also provides a computer-readable storage medium having a computer programs stored thereon. When the computer program is executed by a computer, the aforementioned method for communication is executed. The storage medium may include a read-only memory (ROM), a random access memory (RAM), a magnetic disk, or an optical disk. The storage medium may also include a non-volatile memory or a non-transitory memory.

An embodiment of the present disclosure also provides a WiFi device comprising a memory and a processor, wherein the memory stores a computer program executable on the processor, wherein the processor executes the steps of the aforementioned method for communication. The terminal includes, but is not limited to, a mobile phone, a computer, a tablet computer, or other terminal devices.

The WiFi device may be a mobile phone, a computer, a tablet computer, a vehicle-mounted terminal, a wearable device, etc., but is not limited thereto.

An embodiment of the present disclosure also provides a peer device comprising a memory and a processor, wherein the memory stores a computer program executable on the processor, wherein the processor executes the steps of the aforementioned method for communication. The terminal includes, but is not limited to, a mobile phone, a computer, a tablet computer, or other terminal devices.

The peer device may be a mobile phone, a computer, a tablet computer, a vehicle-mounted terminal, a wearable device, etc., but is not limited thereto.

Referring to FIG. 18, FIG. 18 shows a schematic hardware structural diagram of a WiFi device according to the present disclosure. The terminal shown in FIG. 18 includes a memory 181, a processor 182, and a transceiver 183. The processor 182 is coupled to the memory 181 and transceiver 183. The memory 181 can be located inside or outside the terminal. The memory 181, processor 182, and transceiver 183 can be connected via a communication bus. The transceiver 183 is used to communicate with other devices or a communication network.

Optionally, the transceiver 183 can be a transmitter. The memory 181 stores a computer program executable on the processor 182. When the processor 182 executes the computer program, the transceiver 183 performs the steps of the method for communication provided in the above embodiment.

It should be understood that in the embodiments of the present disclosure, the processor may be a central processing unit (CPU). The processor may also be other general-purpose processors, digital signal processors (DSPs), application-specific integrated circuits (ASICs), field programmable gate arrays (FPGAs), other programmable logic devices, discrete gate or transistor logic devices, discrete hardware components, etc. The general-purpose processor may be a microprocessor, or the processor may be any conventional processor.

It should also be understood that the memory in the embodiments of the present disclosure may be volatile memory or non-volatile memory, or may include both volatile and non-volatile memory. Non-volatile memory may be ROM, programmable read-only memory (PROM), erasable programmable read-only memory (EPROM), electrically erasable programmable read-only memory (EEPROM), or flash memory. Volatile memory may be random access memory (RAM), which serves as an external cache. By way of example, but not limitation, many forms of RAM are available, such as static random access memory (SRAM), dynamic random access memory (DRAM), synchronous dynamic random access memory (SDRAM), double data rate synchronous dynamic random access memory (DDR SDRAM), enhanced synchronous dynamic random access memory (ESDRAM), synchronous link dynamic random access memory (SLDRAM), and direct RAM bus random access memory (DR RAM).

The above embodiments may be implemented in whole or in part via software, hardware, firmware, or any other combination thereof. When implemented using software, the above embodiments may be implemented in whole or in part in the form of a computer program product. The computer program product comprises one or more computer instructions or computer programs. When loaded or executed on a computer, the computer instructions or computer program fully or partially execute the processes or functions described in the embodiments of this disclosure. The computer may be a general-purpose computer, a special-purpose computer, a computer network, or other programmable device. The computer program can be stored in a computer-readable storage medium or transmitted from one computer-readable storage medium to another. For example, the computer program can be transmitted from one website, computer, server, or data center to another website, computer, server, or data center via wired or wireless means.

It should be understood that in the various embodiments of this disclosure, the sequence numbers of the aforementioned processes do not imply a precedence in execution order. The execution order of each process is determined by its function and inherent logic and does not constitute any limitation on the implementation of the embodiments of this disclosure.

In the several embodiments provided herein, it should be understood that the disclosed methods, devices, and systems can be implemented in other ways. For example, the device embodiments described above are merely illustrative; for example, the division of units described is merely a logical functional division; actual implementations may employ other divisions; for example, multiple units or components may be combined or integrated into another system, or some features may be omitted or not implemented. Furthermore, the coupling or direct coupling or communication connection shown or discussed may be through interfaces, or indirect coupling or communication connection between devices or units, which may be electrical, mechanical, or other forms.

The units described as separate components may or may not be physically separate, and the components shown as units may or may not be physical units; that is, they may be located in a single location or distributed across multiple network units. Some or all of these units may be selected to achieve the objectives of this embodiment based on actual needs.

In addition, the functional units in the various embodiments of this disclosure may be integrated into a single processing unit, each unit may be physically included separately, or two or more units may be integrated into a single unit. These integrated units may be implemented in hardware or as hardware plus software functional units. For example, for each device or product applied to or integrated into a chip, each module/unit contained therein may be implemented in the form of hardware such as circuits, or at least some of the modules/units may be implemented in the form of software programs, which run on a processor integrated inside the chip, and the remaining (if any) modules/units may be implemented in the form of hardware such as circuits; for each device or product applied to or integrated into a chip module, each module/unit contained therein may be implemented in the form of hardware such as circuits, and different modules/units may be located in the same component (such as a chip, circuit module, etc.) or different components of the chip module, or at least some of the modules/units may be implemented in the form of software programs. The unit can be implemented as a software program that runs on the processor integrated within the chip module, while the remaining modules/units (if any) can be implemented as hardware such as circuits. For various devices and products applied to or integrated into a terminal, the modules/units contained therein can all be implemented as hardware such as circuits. Different modules/units can be located in the same component (e.g., chip, circuit module, etc.) or different components within the terminal. Alternatively, at least some modules/units can be implemented as a software program that runs on the processor integrated within the terminal, while the remaining modules/units (if any) can be implemented as hardware such as circuits.

The above-mentioned integrated unit implemented as a software functional unit can be stored in a computer-readable storage medium. The above-mentioned software functional unit, stored in a storage medium, includes instructions for causing a computer device (such as a personal computer, server, or network device) to perform some of the steps of the methods described in various embodiments of the present disclosure. The aforementioned storage medium includes various media capable of storing program code, such as a USB flash drive, a mobile hard drive, ROM, random access memory (RAM), a magnetic disk, or an optical disk.

It should be understood that the term "and/or" in this disclosure merely describes an association between associated objects, indicating that three possible relationships exist. For example, "A and/or B" can represent: A exists alone, A and B exist simultaneously, or B exists alone. Furthermore, the character "/" in this document indicates that the associated objects are in an "or" relationship.

"Multiple" in the embodiments of this disclosure refers to two or more.

"Equal to" can be used with "less than" or with "greater than," but not with both "less than" and "greater than" simultaneously. When "equal to" is used with "less than," the technical solution employed by "less than" applies. When "equal to" is used with "greater than," the technical solution employed by "greater than" applies.

The terms "first," "second," and so on, used in the embodiments of this disclosure, are intended solely for illustration and to distinguish the described objects. They are not ordered, do not specify a specific number of devices in the embodiments of this disclosure, and do not constitute any limitation on the embodiments of this disclosure.

Although disclosed as above, the present disclosure is not limited to the foregoing description. A person skilled in the art can make various changes and modifications without departing from the spirit and the scope of the present disclosure. Thus, the scope of protection of the present disclosure should be subject to the scope defined by the claims.

## Claims

1. A method for communication, comprising:
configuring in device coexistence information, wherein the in device coexistence information is used to indicate that a WiFi device supports only reception during a constrained WiFi time window.

2. The method for communication according to claim 1, wherein the constrained WiFi time window is a time window subject to interference from a non-periodic interference source;
the method further comprises:
transmitting the in device coexistence information before a starting instant of the constrained WiFi time window.

3. The method for communication according to claim 2, wherein the in device coexistence information is carried in one or more of the following:
the in device coexistence information is carried in a response frame which is transmitted to a peer device;
the in device coexistence information is carried in a transmitted frame which is transmitted actively.

4. The method for communication according to claim 1, wherein the constrained WiFi time window is a time window subject to interference from a periodic interference source.

5. The method for communication according to claim 4, wherein one or more of the following conditions are met:
the constrained WiFi time window comprises a non-target wake time service period time window determined by interaction of request/response frames established by target wake time;
the in device coexistence information is indicated by a target wake time negotiation result.

6. The method for communication according to claims 2 or 4, wherein one or more of the following conditions are met:
the in device coexistence information further comprises capability indication information;
the frame carrying the in device coexistence information further comprises the capability indication information;
the target wake time negotiation result indicating the in device coexistence information further comprises the capability indication information;
wherein the capability indication information indicates the reception capability of the WiFi device during the constrained WiFi time window.

7. The method for communication according to claim 6, wherein the capability indication information comprises one or more of the following:
max spatial stream for received frames;
max data rate;
min transmit power; and
available frame bandwidth.

8. The method for communication according to claim 6, wherein the WiFi device has 2x2 Multi-Input-Multi-Out reception capability;
the capability indication information is further used to indicate that the WiFi device only supports 1x1 Single-Input Single-Out during the constrained WiFi time window.

9. The method for communication according to claim 1, wherein the WiFi device has established a Block Acknowledgement Agreement with a peer device;
the method further comprises:
receiving an Aggerated Medium Protocol Data Unit, wherein the data link layer header of the Aggerated Medium Protocol Data Unit comprises an Acknowledgement Policy Indicator;
wherein the Acknowledgement Policy Indicator is used to indicate whether the peer device requires the WiFi device to reply with an Acknowledgement frame.

10. The method for communication according to claim 9, wherein the Acknowledgement Policy Indicator satisfies one or more of the following conditions:
the Acknowledgement Policy Indicator is 2 bits;
if the peer device does not require the WiFi device to immediately reply with the Acknowledgement frame, the Acknowledgement Policy Indicator is set to one of 0b'11 and 0b'00, and is received individually or continuously during the constrained WiFi time window;
if the peer device requires the WiFi device to reply with the Acknowledgement frame, the Acknowledgement Policy Indicator is set to the other of 0b'11 and 0b'00, and is received during an unconstrained WiFi time window.

11. The method for communication according to claim 1, wherein the WiFi device has established a Block Acknowledgement Agreement with a peer device;
the method further comprises:
receiving a Block Acknowledgement request frame during an unconstrained WiFi time window;
wherein the Block Acknowledgement request frame is used to indicate that the peer device does not require the WiFi device to reply with an Acknowledgement frame.

12. The method for communication according to claim 1, further comprising:
transmitting a transmitted frame to a peer device;
wherein the transmitted frame carries indication information, which is used to indicate that the constrained WiFi time window ends early.

13. The method for communication according to claim 1, wherein the WiFi device has established a multi-link association with a peer device, and the in device coexistence information corresponds to a first link;
the method further comprises:
in response to not transmitting a frame carrying the in device coexistence information on the first link before a preset instant, transmitting a frame carrying the in device coexistence information on a second link;
wherein the preset instant is determined based on a starting instant of the constrained WiFi time window.

14. A method for communication, comprising:
determining in device coexistence information, wherein the in device coexistence information is used to indicate that a WiFi device supports only reception during a constrained WiFi time window.

15. A WiFi device, comprising a memory and a processor, wherein the memory stores a computer program executable on the processor, wherein the processor executes the steps of a method for communication when executing the computer program, wherein the method comprises:
configuring in device coexistence information, wherein the in device coexistence information is used to indicate that a WiFi device supports only reception during a constrained WiFi time window.
